# FASCICULE DE BREVET EUROPEEN

(11) **EP 3 456 528 B1**
(45) Date de publication et mention de la délivrance du brevet: **27.07.2022**
(21) Numéro de dépôt: 18195504.8
(22) Date de dépôt: 19.09.2018
(51) Int. Cl.: B31B 50/74, B31B 105/00, B31B 120/50, B31B 110/10

(54) **PROCÉDÉ DE FABRICATION DE GOBELETS EN CARTON RECOUVERT DE VERNIS BIODÉGRADABLE**
HERSTELLUNGSVERFAHREN VON BECHERN AUS MIT EINEM BIOLOGISCH ABBAUBAREN LACK BESCHICHTETEM KARTON
METHOD FOR MAKING PAPERBOARD CUPS COATED WITH BIODEGRADABLE GLAZE

(30) Priorité: 19.09.2017 FR 1758657
(43) Date de publication de la demande: 20.03.2019
(73) Titulaire: C.E.E Compagnie Européenne des Emballages Robert Schisler, 79100 Thouars (FR)
(72) Inventeur: SALLOT, Thierry, 79100 MAUZE-THOUARSAIS (FR); SCHISLER, Claire, 79100 THOUARS (FR)
(74) Mandataire: Vidon Brevets & Stratégie

(56) Documents cités:
- WO-A1-94/26513
- WO-A2-2010/052571
- DE-C- 961 053
- JP-A- 2003 013 391
- JP-A- 2005 096 814
- US-A- 5 368 893
- US-A1- 2009 014 506
- Kimpimäki Tomi ET AL: "Dispersion coating" In: "Papermaking Science and Technology", 1 January 2008 (2008-01-01), XP055802456, ISBN: 978-952-5216-28-8 pages 1-346, * page 60 - page 104 *

## Description

### 1. DOMAINE DE L'INVENTION

Le domaine de l'invention est celui de la fabrication de gobelets en carton destinés à recevoir des liquides alimentaires et fabriqués à partir de feuilles de cartons prédécoupées dans des bobines, de différentes laizes de préférence. Plus précisément, l'invention concerne le fait que le carton est recouvert d'un vernis biodégradable qui est appliqué sur au moins une face du carton selon la méthode de l'enduction couchage.

### 2. ARRIÈRE-PLAN TECHNOLOGIQUE

Les gobelets en carton sont un ustensile très utilisé de nos jours pour consommer un liquide alimentaire, on en trouve notamment dans la restauration rapide et bon nombre de distributeurs de boisson du type : café, thé, chocolat chaud, bouillon de légumes, ... Les « gobelets en carton » désignent en fait des récipients constitués de carton recouvert d'une couche de polyéthylène sur au moins l'une ou les deux faces du carton. Ces gobelets sont fabriqués à partir de deux feuilles de carton prédécoupées pour former une fois enroulée une structure tronconique pour l'une et un fond circulaire pour l'autre. Le carton de ces gobelets doit être recouvert d'une couche de protection permettant de rendre étanche les parois et de permettre également le thermoscellage. De plus la couche de protection qui est en contact avec le contenu du gobelet doit respecter les normes liées aux emballages alimentaires et ne doit pas générer d'impact sensoriel pouvant dénaturer le goût voire l'odeur du contenu. Pendant de nombreuses années, les fabricants ont utilisé du polyéthylène (PE) pour recouvrir le carton sur une ou sur les deux faces.

Le polyéthylène assure les fonctions suivantes :
- étanchéité aux liquides (les parois intérieures et extérieures sont recouvertes dans le cas des boissons froides du fait du phénomène de condensation possible à l'extérieur du gobelet),
- thermo scellage, en soudant la paroi latérale et le fond du gobelet,
- imprimabilité pour personnaliser les gobelets sur la face extérieure,
- passage par les différentes étapes de fabrication des gobelets avec respect des épaisseurs nécessaires aux outillages de format, spécifiques à chaque format de gobelet, sans délaminer ni dégrader la couche de PE qui assure l'étanchéité et les soudures latérales et de fond,
- respect des procédures de contrôles en production sur la conformité des soudures et les tests fuites aux solutions test en place,
- conformité au règlement UE N°10/2011 de la commission du 14 Janvier 2011 concernant les matériaux et objets en matière plastique destinées à entrer en contact avec des denrées alimentaires et notamment des boissons chaudes, froides et glaces,
- absence d'impact sensoriel sur le contenu du gobelet.

De nos jours, des milliards de gobelets sont fabriqués chaque année. Dès lors, la question du traitement des gobelets utilisés et du recyclage du carton recouvert d'une couche de protection se pose lorsque le gobelet a été utilisé. Les gobelets en carton recouverts de PE sont théoriquement recyclables. Il est possible de séparer le polyéthylène du carton afin de recycler séparément les constituants par un système de bains. En effet, le niveau de flottaison du carton est différent du niveau de flottaison du PE. Il n'existe généralement pas de chaîne de récupération des gobelets en restaurant ou chez les particuliers permettant de séparer le PE du carton et donc de les recycler. Bien souvent ces gobelets sont jetés dans la poubelle des objets non recyclés. De plus, la présence de PE présente des inconvénients majeurs suivants : les gobelets carton ne sont pas : biodégradables, compostables, repulpables. Ce dernier terme signifie qu'il est impossible de les passer dans un appareil appelé « pulpeur » en papeterie, cet appareil refait de la pâte à papier carton sans séparer le PE du carton.

Une solution alternative au polyéthylène consiste à utiliser de l'Acide Polylactique (PLA). Les gobelets recouverts de PLA sur une ou les deux faces de carton sont aptes au contact alimentaire direct, et doivent en cela répondre aux spécifications définies par le Règlement CE N°1935/2004 qui concerne l'aptitude au contact alimentaire. Concernant le respect de l'environnement, les gobelets doivent notamment répondre aux normes EN N°14021 et EN N°13430 qui concernent la biodégradabilité et le fait d'être recyclable. Enfin, il est préférable que les gobelets puissent être recyclés par compostage selon des techniques industrielles à 70°C conformément à la norme EN 13432 (cette norme est plus contraignante que les normes EN N°14021 et EN N°13430). La certification des gobelets selon ces normes conditionne hautement le choix de la substance utilisée pour la couche de protection.

Bien que globalement plus avantageux que le PE, le PLA présente néanmoins les inconvénients suivants :
- Les gobelets ne peuvent pas être repulpables en papeterie en l'état sans séparer le PLA du carton. Il est quasi impossible de séparer le PLA du carton par un système de bains traditionnel comme cela est possible en utilisant du PE.
- Les gobelets ne sont pas compostables à température ambiante à 30°C (cette technique est qualifiée : «OK Compost Home » par la profession, en utilisant les services d'un organisme certificateur) dans un composteur individuel que tout particulier peut posséder.
- Le carton couché PLA est plus difficile à travailler que le carton couché PE lors du processus de formation des gobelets : plus de rigidité, plage de température de thermoscellage réduite...
- Le dépôt minimum de PLA obtenu par extrusion sur le carton est de l'ordre de 25gr/m² par face lorsque le dépôt de PE est de 12gr/m²à 18gr/m², ce qui implique plus d'épaisseur et donc un coût supérieur.
- Le PLA est plus difficile à imprimer que le PE au moyen des encres et techniques d'impression connues. La qualité d'impression est dégradée et la tenue de l'encre est moins bonne, ce qui génère des phénomènes de report d'impression pouvant être visibles à l'extérieur et à l'intérieur des gobelets du fait du travail en bobines.
- Le PLA contient des Organismes Génétiquement Modifiés (OGM), certains clients du secteur des gobelets carton les refusent catégoriquement.

Le document DE 961 053 C décrit la fabrication d'un récipient conique, en papier, en carton ou matière analogue, destiné à recevoir un liquide alimentaire. La forme tronconique du récipient fabriqué permet d'empiler facilement les récipients les uns sur les autres. Ces récipients, typiquement des pots de yaourt, sont fabriqués en carton recouvert de paraffine, qui ne respecte pas suffisamment l'environnement. De plus, les feuilles de carton sont collées ce qui risque de provoquer des fuites, notamment pour des applications de type boissons chaudes plus exigeantes en terme d'étanchéité et de résistance aux fuites..

Le document JP 2003 013391 décrit l'utilisation d'une résine biodégradable pour la fabrication de récipient, destiné notamment à l'alimentation. Dans ce procédé particulier, les feuilles de papier sont prédécoupées avant d'être enduite de résine et, le papier encore humide de résine est chauffé et pressé pour produire la forme de récipient voulue. Ce document enseigne donc un procédé complexe pour fabriquer le gobelet qui doit respecter un séquencement précis pour la découpe du carton, son enduisage et le montage du récipient en utilisant deux feuilles, l'une pour le flanc et l'autre pour le fond.

Le document US 2009/014506 enseigne un procédé de fabrication de feuille de carton pour la production de récipients destinés à contenir des aliments. Le carton est revêtu d'un liquide de revêtement fabriqué en mélangeant un liquide biodégradable et un primaire, selon un rapport de 9 :1, les matériaux biodégradables sont : polymères, ou acétate de polyvinyle. Le carton doit être préchauffé par des rouleaux et l'électricité statique doit être éliminée, ce qui rend le procédé très complexe et ne garantit pas une épaisseur constante de produit servant de colle et assurant l'étanchéité.

Le document JP 2005 096814 A enseigne la fabrication d'un gobelet de forme tronconique à partir de feuilles de papier enduites de PLA. La soudure entre les deux feuilles constituant le flanc et le fond s'effectue par le rajout d'une couche de vernis à l'endroit de la soudure. Ce document enseigne de combiner l'utilisation : d'une feuille de papier avec une couche de PLA, qui est biodégradable, pour obtenir un niveau de barrière suffisant pour être destiné à recevoir un liquide alimentaire ; et d'une couche de vernis appliquée localement au niveau des soudures entre les feuilles.

De nos jours, il importe donc de trouver une méthode de fabrication qui permette aux gobelets en carton de conserver ces caractéristiques d'alimentarité et d'imprimabilité, sans impact sensoriel tout en étant repulpables en papeterie, recyclables, biodégradables, compostables suivant la norme EN 13432 et si possible à température ambiante (30°C c'est à dire utilisable dans un composteur à domicile), ceci tout en respectant les contraintes de fabrication liées aux outillages de format de gobelets, le processus de formation des gobelets et les contrôles qualité nécessaires à la validation des gobelets.

### 3. EXPOSÉ DE L'INVENTION

Dans un mode de réalisation particulier de l'invention, il est proposé un procédé de fabrication d'un gobelet destiné à contenir une boisson alimentaire, comportant une étape de découpe d'au moins une feuille de carton enduite pour former le flanc et le fond, et une étape de thermoscellage des feuilles ainsi découpées pour former le gobelet. L'au moins une feuille de carton est enduite au moins du coté intérieur du gobelet d'un vernis biodégradable selon une technique d'enduction couchage.

De cette manière, le gobelet ainsi fabriqué est repulpable en papeterie, recyclable, biodégradable, et compostable. Le vernis biodégradable ne perturbe pas et ne pollue pas le fonctionnement du « pulpeur » utilisé en papeterie. Le gobelet ainsi fabriqué est donc repulpable en papeterie.

Selon un premier mode de réalisation, l'étape d'enduction comporte au moins les quatre sous-étapes successives suivantes :
- application de la feuille de carton contre au moins un cylindre barboteur plongeant chacun dans un bac contenant ledit vernis,
- passage de la feuille de carton ainsi enduite devant un générateur de lame d'air,
- passage de la feuille de carton dans au moins un poste de séchage,
- passage de la feuille de carton sur une calandre de refroidissement.

De cette manière, la densité du vernis sur le carton peut être précisément déterminée, et le carton enduit est suffisamment sec et refroidi pour être ensuite bobiné.

Selon un autre mode de réalisation, la feuille de carton est appliquée contre une succession de plusieurs cylindres plongeant dans des bacs contenant des densités différentes de vernis selon le dépôt à réaliser, les premiers bacs mis en contact avec le carton ayant une dilution plus importante que les bacs suivants pour une application en plusieurs couches sur une même face. De cette manière, le vernis s'imprègne dans le carton de façon plus performante.

Selon un autre mode de réalisation, l'étape de découpe comporte deux sous-étape consistant l'une à découper le flanc à partir d'une première feuille de carton préalablement enduite, et l'autre à découper le fond à partir d'une seconde feuille de carton préalablement enduite. De cette manière, la densité du vernis est définie selon que la feuille est utilisée pour le fond ou le flanc.

Selon un autre mode de réalisation, le carton du fond est moins épais et dispose d'un grammage plus léger que le carton utilisé pour le flanc. De cette manière, l'épaisseur et le grammage du carton sont définis selon que la feuille est utilisée pour le fond ou le flanc.

Selon un autre mode de réalisation, l'étape de découpe comporte une sous-étape consistant l'une à découper le flanc et le fond à partir de la même feuille de carton préalablement enduite. De cette manière, une seule référence de feuille de carton est utilisée pour la fabrication, ce qui simplifie les opérations.

Selon l'invention, le dépôt d'extrait sec de vernis biodégradable est de 8 à 16 grammes par m² sur la face carton destinée à l'intérieur des gobelets, et selon un autre mode de réalisation de 2 à 6 grammes par m² sur la face carton destinée à l'extérieur des gobelets.

Selon un autre mode de réalisation, l'étape d'enduction du vernis biodégradable comporte une étape de régulation de la densité de vernis en utilisant l'un au moins des moyens pris dans la liste suivante : « une racle passant sur la feuille de carton, une lame d'air, une barre de Meyer ». De cette manière, la couche de vernis utilisé est homogène et d'une épaisseur uniforme.

Selon un autre mode de réalisation, le procédé comporte une étape de test consistant à exercer une force de chaque côté de la soudure liant les cotés latéraux thermoscellés du flanc ou de la soudure liant le flanc au fond, jusqu'à ce que cette dernière cède, la température pour les prochains essais étant augmentée si la soudure lâche sans que le carton ne se délamine, défibre ou déchire. De cette manière, le procédé de fabrication est testé et les paramètres sont finalisés avant de lancer la production des gobelets.

Selon un autre mode de réalisation, le procédé comporte une étape d'impression d'un élément graphique sur la face extérieure du flanc du gobelet ainsi formé, ladite étape intervenant après une étape d'enduction de ladite face avec une couche de 2 à 6 grammes/m² d'extrait sec de vernis.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente une vue synoptique d'une chaîne de production de carton enduit, selon un exemple préféré de réalisation,
- la figure 2 représente un exemple de gobelet fabriqué selon le procédé objet de la présente demande,
- la figure 3 montre un synoptique des étapes d'un procédé de fabrication de gobelets, selon un exemple préféré de réalisation,
- la figure 4 présente un exemple de découpe d'une feuille de carton pour constituer le flanc du gobelet,
- la figure 5 présente un exemple de découpe d'une feuille de carton pour constituer le fond du gobelet,
- la figure 6 présente la coopération entre les deux feuilles de carton pour réaliser la liaison du fond du gobelet selon un exemple de réalisation,
- la figure 7 représente le roulage annulaire du bord supérieur du gobelet pour former un rebord selon un exemple de réalisation.

### 5. DESCRIPTION DÉTAILLÉE D'UN MODE DE REALISATION

Sur toutes les figures du présent document, les éléments (ou les étapes) identiques sont désignées par une même référence numérique.

### 5.1 Principe général

Il est proposé un procédé de fabrication d'un gobelet destiné à contenir une boisson alimentaire, comportant une étape de découpe d'au moins une feuille de carton enduite pour former le flanc et le fond, et une étape de thermoscellage des feuilles ainsi découpées pour former le gobelet. L'au moins une feuille de carton est enduite au moins du coté intérieur du gobelet d'un vernis biodégradable selon une technique d'enduction couchage.

### 5.2 Description du matériel de production du carton

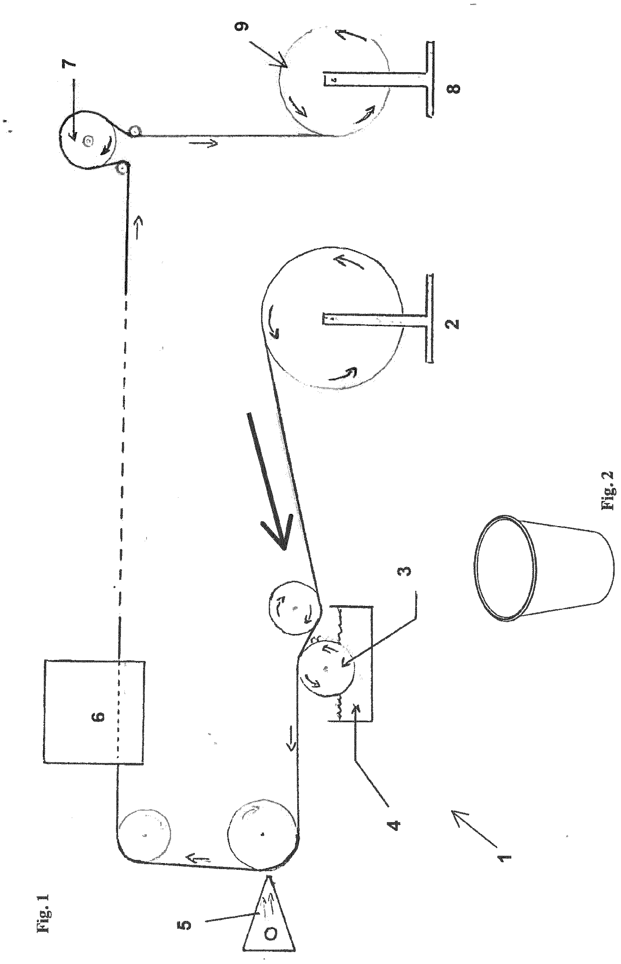

Préalablement à la fabrication du gobelet et selon l'invention, le procédé utilise du carton enduit sur au moins une face d'un vernis biodégradable. La production du carton est décrite en relation avec la **Fig. 1**, qui présente une chaîne de production, selon un exemple préféré de réalisation.

La chaîne de production 1 comporte notamment les dispositifs suivants :
- un dérouleur 2 qui stocke autour d'un mandrin une feuille continue de carton vierge,
- un cylindre barboteur 3 qui assure le transfert du vernis sur le carton. Ce cylindre plonge dans un bac 4 contenant le vernis biodégradable et possédant également la caractéristique de pouvoir être facilement composté. Le cylindre applique dans sa rotation le vernis sur le carton mis en contact sur sa surface de révolution. La vitesse de rotation de ce cylindre est déterminée pour suralimentée en vernis le carton. La densité de vernis est ensuite régulée au moyen d'une lame d'air (et/ou d'une racle suivant l'installation). La vitesse de défilement de la feuille de carton sur ce cylindre est variable suivant le type de coucheuse utilisée : de 50 à 60m/min pour les plus petites installations à plus de 200 m/min sur les plus grosses installations ou encore coucheuses en ligne de papeterie.
- un dispositif de génération d'un flux d'air 5, appelé «lame d'air ». Ce dispositif permet de souffler l'excès de vernis, en surface et ainsi de maintenir une épaisseur de couche et un dépôt constant de vernis par unité de surface. L'obtention du dépôt correct de vernis est obtenu par la combinaison des facteurs suivants : l'angle de la lame d'air, l'écartement de la lame d'air par rapport au carton et le débit de la lame d'air.
- un poste de séchage 6. Ce poste est de préférence un four dont l'intérieur est maintenu à température constante. D'autres dispositifs de chauffage rapide sont possibles, notamment par rayonnement,
- une calandre de refroidissement 7. Ce dispositif permet de refroidir le carton enduit avant son conditionnement en rouleau. Ce dispositif permet d'éviter que les feuilles de carton ne collent les unes aux autres du fait de la combinaison de la chaleur suite au passage dans le four et de la tension nécessaire à l'enroulage en bobine.
- un enrouleur 8 qui récupère le carton enduit de vernis biodégradable et réalise des bobines faciles à transporter, et à utiliser en vue par exemple de l'impression en prépresse puis du découpage des feuilles constituant les gobelets.

Cette chaîne de production 1 permet de produire un carton enduit de vernis sur une seule face. Il est parfaitement possible de disposer sur une telle chaîne d'un second ou d'un troisième groupe d'enduction, chaque groupe comportant un cylindre barboteur 3, d'un générateur de lame d'air 5, et d'un poste de séchage 6 pour enduire une face en deux couches successives et/ou enduire l'autre face du carton. Cette méthode ne nécessite qu'une passe pour enduire le carton sur les deux faces. L'enduction peut être réalisée hors ligne sur une machine spécifique ou en ligne en papeterie lors de la fabrication du carton. Qu'il soit enduit sur une face ou sur les deux faces, la feuille de carton enduit est enroulée autour d'un mandrin pour former une bobine 9.

Cette chaîne de production 1 du carton utilise la technique de l'enduction couchage qui permet d'obtenir une couverture de qualité et un bon état de surface (la couche de vernis est bien régulière et uniforme sans manque ni rainure ou faille par lesquelles les liquides pourraient s'introduire dans le carton et générer un ramollissement ou des fuites). A l'aide de cette technique d'enduction, la couche de vernis est uniforme et ne présente pas de rainure ou de faille par lesquelles les liquides pourraient s'introduire dans le carton et générer un ramollissement ou des fuites. De plus, la couche de vernis est bien régulière en terme de grammes par unité de surface, ce qui permet d'obtenir des soudures de grande qualité.

L'enduction couchage peut être réalisée sur un système de type barre de Meyer, une coucheuse à racle, une coucheuse à lame d'air ou un cumul de ces différentes techniques. Les différentes expérimentations ont montré que la technique d'enduction sur une coucheuse à lame d'air permet de maîtriser plus précisément le dépôt d'extrait sec de vernis et d'assurer une couche uniforme et régulière en surface du carton comme précédemment décrite.

La capacité thermoscellante du vernis permet une soudure suite à un contact très court, inférieur à 2 dixième de seconde par exemple et à une température variant par exemple de 300°C à 600°C. De telles caractéristiques permettent une cadence industrielle de production de gobelets pouvant aller à 300 récipients par minutes. Le vernis est également hydrophobe de manière à rendre le carton totalement étanche à l'eau mais aussi aux boissons chaudes (supérieure à 90°C) et froides pouvant être basiques neutres ou acides selon leur nature sur une durée de mise en contact de 30 min. Enfin, le vernis est biodégradable de manière à pouvoir conférer aux gobelets qu'il va permettre de réaliser, une fois l'enduction réalisée sur le carton, des caractéristiques de recyclabilité, repulpabilité en papeterie, biodégradabilité, compostabilité et imprimabilité. Le carton ainsi enduit de vernis doit pouvoir respecter des normes de compostabilité, par exemple la norme EN 13432.

Un exemple de vernis biodégradable utilisé est une cire de paraffine à greffe acrylique ou « acrylic-grafted parafin wax » en langue anglo-saxonne. Ce type de vernis confère au carton les propriétés de thermoscellage et de résistance à l'eau et à la graisse. Il est en effet préférable d'utiliser un vernis en phase aqueuse constitué de résines à base de cires de paraffine, pour fabriquer des gobelets destinés à recevoir des boissons chaudes et froides, et respectueux de l'environnement.

Le dépôt d'extrait sec de vernis biodégradable pour la réalisation des gobelets carton est de 8 à 16gr/m² sur la face carton destinée à l'intérieur des gobelets et si besoin, de 2 à 6gr/m² sur la face carton destinée à l'extérieur des gobelets. Le dépôt sur la face extérieure est optionnel, il permet cependant d'améliorer la qualité des soudures de flanc et du fond et permet surtout d'assurer une meilleure étanchéité du carton sur la face externe des gobelets du fait du phénomène de condensation qui peut apparaître sur cette face lorsque le gobelet est rempli de boisson froide et plus particulièrement avec des glaçons ou de la glace. Le dépôt de 8 à 16gr/m² d'extrait sec de vernis sur la face carton destinée à l'intérieur des gobelets peut être réalisé en une ou plusieurs passes, comme cela a été décrit précédemment en utilisant plusieurs groupes d'enduction. Le dépôt de 2 à 6gr/m² d'extrait sec de vernis sur la face carton destinée à l'extérieur des gobelets étant plus faible, une seule passe suffit généralement.

Selon un perfectionnement, le vernis est fourni concentré ce qui oblige les fabricants de gobelets à le diluer (on dit « allonger» dans la profession). Le taux d'allongement du vernis est déterminé en fonction de la concentration du vernis, de sa viscosité de départ, du dépôt en extrait sec attendu, de l'équipement présent sur la coucheuse et de la vitesse linéaire de défilement du carton. Plus le vernis est dilué plus il pénètre le carton, moins il est dilué plus il reste en surface sur le carton. Lorsque les 8 à 16gr/m² de vernis sont déposés en plusieurs passes, une plus forte dilution est appliquée à la première passe afin de pénétrer le carton (qui est de la fibre) et de fermer le support (afin d'obtenir l'effet d'une sous-couche). Une plus faible dilution est alors appliquée sur la ou les couches suivantes afin d'obtenir une couche uniforme et régulière de vernis en surface du carton garantissant ainsi l'étanchéité et le thermoscellage. Le pourcentage de dilution dépend largement du matériel utilisé, du nombre de passes réalisées et de la vitesse linéaire de défilement du carton. Dans le cas par exemple d'un déplacement de la feuille de carton de 50mètres par minute et pour une concentration de vernis 50%, l'expérimentation a montré que, pour obtenir des dépôt d'extrait sec performants, on peut diluer à 50% pour la face interne et à 250% pour la face externe, et ne réaliser qu'une seule passe. Une autre expérimentation sur un autre type de machine a abouti pour un même résultat, à des dilutions différentes : 20% de dilution pour la face interne et 140% pour la face externe pour une vitesse de 60 mètres par minutes. On peut donc établir des fourchettes de dilution entre 15 % et 60% pour la face interne et, entre 100 et 300% pour la face externe, dans le cas d'une enduction en une seule passe compte tenu des vitesses et du type de coucheuses utilisées.

Une fois le carton enduit de vernis biodégradable, celui-ci est séché par un ou plusieurs postes de séchage 6 à température élevée (150°C à 250°C par exemple) afin de former la couche attendue en surface du carton. La température de séchage dépend de l'équipement utilisé sur la coucheuse (système de séchage électrique, à gaz, direct, indirect...), de la vitesse linéaire de défilement du carton, de la viscosité du vernis et du dépôt en extrait sec réalisé. Suivant l'équipement et les températures de séchage utilisées, il peut être nécessaire de refroidir le carton enduit au moyen d'une calandre refroidissante 7 avant la réalisation de la bobine 9. Sachant que le vernis biodégradable possède des propriétés thermoscellantes, le refroidissement évite que les spires de carton enduit de vernis ne se soudent ou se collent entre elles lors du bobinage.

Nous verrons par la suite que le gobelet est fabriqué à partir de deux feuilles de carton prédécoupées constituant le flanc et le fond. C'est le cas pour des gobelets dont les grammages du carton pour le fond et pour le flanc sont différents. Le dépôt de vernis peut être maintenu à 8 à 16gr/m² d'extrait sec sur la face interne et 2 à 6 gr/m² sur la face externe, mais la densité du vernis peut être différente selon le grammage du carton. Si les caractéristiques de ces deux feuilles sont différentes en terme de densité de vernis biodégradable, alors elles proviennent de deux bobines 9 différentes. Suivant les formats de gobelets, les bobines de carton utilisées pour les flancs ont pour caractéristiques une épaisseur comprise entre 250 et 500 microns et un grammage compris entre 190 et 400 gr/m². Les bobines de carton pour les fonds ont une épaisseur comprise entre 250 et 370 microns et un grammage compris entre 190 et 300 gr/m² suivant le format du gobelet. De façon générale, la feuille de carton du fond est moins épaisse et dispose d'un grammage plus léger que la feuille de carton utilisée pour le flanc. Selon une variante de réalisation, les caractéristiques de ces deux feuilles sont identiques en terme de grammage et d'épaisseur. Dans ce cas, les deux feuilles constituant le fond et le flanc peuvent provenir de la même bobine.

Après avoir présenté les appareils et équipements nécessaires à la fabrication d'un gobelet en carton, nous allons maintenant expliciter comment ceux-ci coopèrent dans le cadre d'un procédé de fabrication dudit gobelet. Un exemple de gobelet fabriqué selon le procédé objet de la présente demande est illustré à la **Fig. 2****.**

### 5.3 Description des étapes du procédé de fabrication

De façon générale, le procédé de fabrication comporte au moins les trois étapes suivantes :
- enduction en bobines,
- impression des bobines enduites,
- façonnage en gobelets des bobines préalablement enduites et imprimées.

La succession de ces 3 étapes permet la réalisation des gobelets carton en utilisant un vernis biodégradable et non du polyéthylène.

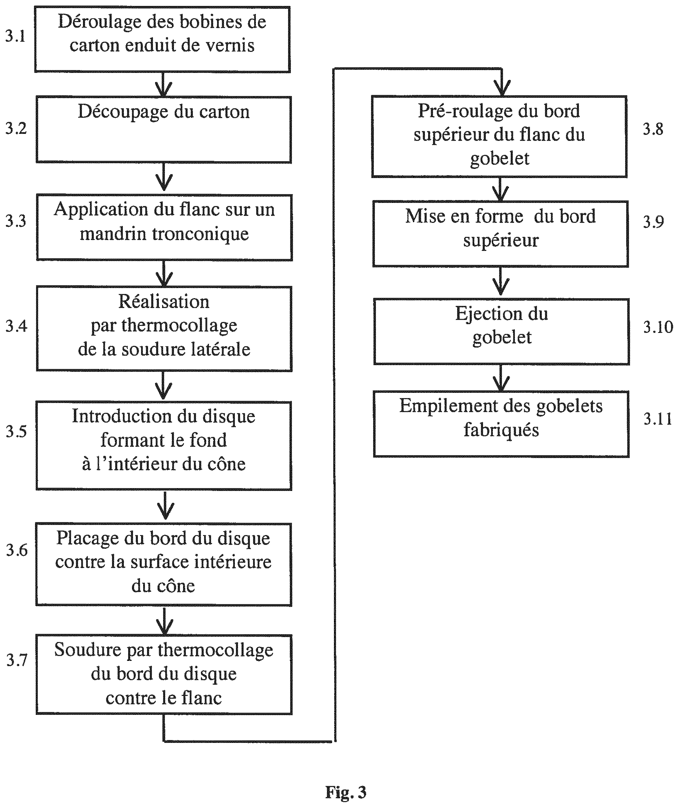

Selon un exemple de réalisation illustré par la **Fig. 3**, le procédé de fabrication des gobelets peut être décomposé en onze étapes successives, dont certaines sont facultatives et d'autres dotées de variantes de réalisation. Le procédé de fabrication décrit ci-après commence après la confection de bobines enroulant une feuille de carton recouverte d'une couche ou plusieurs couches de vernis sur au moins une face. Cette feuille de carton est produite par enduction couchage d'un vernis à l'aide d'une coucheuse à lame d'air, afin de garantir un dépôt de 8 à 16gr/m² d'extrait sec de vernis sur la face carton tournée vers l'intérieur des gobelets et éventuellement, un dépôt de 2 à 6 gr/m² d'extrait sec de vernis sur la face carton tournée vers l'extérieur. Le travail de cette feuille de carton s'effectue en bobines de grandes laizes. Ces bobines sont ou non imprimées en prépresse pour celle destinées au flanc des gobelets et refendues en plus petites laizes de tailles différentes suivant qu'il s'agit du flanc ou du fond en fonction du format des gobelets. Le vernis biodégradable utilisé autorise une impression à l'aide d'une encre d'imprimerie déposée par des techniques d'impression connues telles que : flexo, helio, offset ou encore numérique en prépresse.

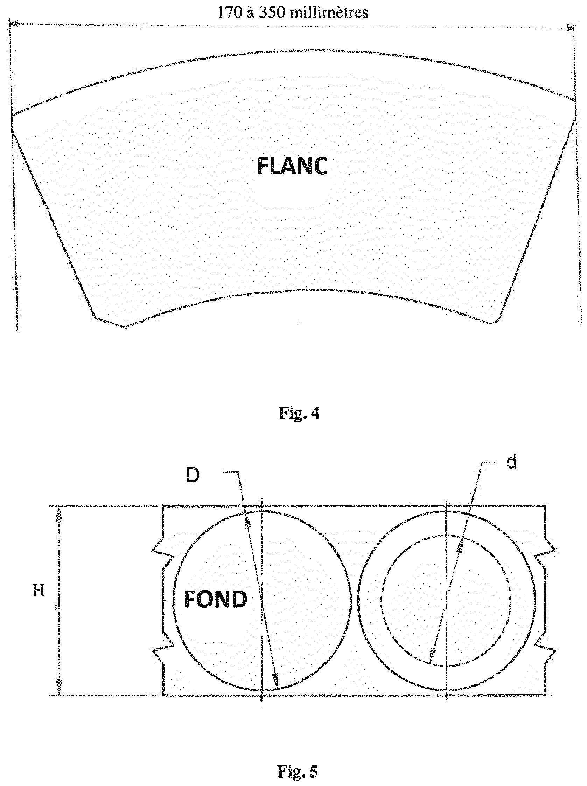

Une première étape 3.1 consiste à dérouler les deux bobines utilisées pour la réalisation du flanc et du fond du gobelet, ces deux bobines ayant de préférence des laizes différentes. Les spires de carton superposées les unes sur les autres autour des axes des deux bobines ne doivent pas être soudées, ni collées, sinon cela aurait pour effet d'arracher ou de dégrader la couche de vernis et ainsi cela nuirait à l'étanchéité et à la qualité des soudures. Un gobelet se compose de deux feuilles découpées. Une première feuille dont un exemple est présenté à la **Fig. 4** possède la forme d'une portion d'anneau coupée de chaque coté par un rayon. Cette première feuille constitue le flanc du gobelet. La plus grande largeur du flanc comme indiqué sur la figure varie de 170 à 400 millimètres selon la taille du gobelet. Une seconde feuille dont un exemple est présenté à la **Fig. 5** est un disque, cette feuille est utilisée pour réaliser le fond du gobelet. Le diamètre D du disque est inférieur au diamètre d du fond du gobelet. La largeur H de la bobine varie de 56 millimètres à 108 millimètres selon la taille du gobelet.

Une fois le carton enduit de vernis déroulé, la découpe (étape 3.2) s'effectue en flancs (cône déroulé à plat) et en fonds (disque). La découpe s'effectue au moyen des couteaux présents sur la presse de découpe, la coupe est nette sans être abrasive, évitant ainsi de produire des morceaux de fibre ou autres peluches sur les bords.

A l'étape 3.3, le corps du gobelet est formé en enroulant le flanc autour d'un mandrin de forme conique. Pour éviter que le vernis biodégradable ne colle au mandrin ou simplement l'encrasse, il ne doit pas être poisseux ou collant à la température d'utilisation sur le mandrin. Pour éviter ce phénomène, il faut diminuer la température de chauffe coté mandrin et augmenter la chauffe externe au mandrin pour la réalisation de la soudure latérale tout en conservant le même point de fusion. Suite à cette modification de paramètres, la qualité de la soudure doit être bien sûr vérifiée. Les dimensions du mandrin sont déterminées de façon que les cotés droit et gauche de la feuille de carton formant le flanc se chevauchent sur 6 à 12 millimètres en moyenne suivant les formats de gobelets considérés.

Ce chevauchement permet de réaliser la soudure latérale (étape 3.4). La zone de chevauchement est pressée au cours d'une durée inférieure à une seconde et chauffée par un souffle d'air chaud (300 à 600°C suivant les zones de soudure. La durée et la température sont déterminées de façon à ne pas faire fondre en totalité ou faire brûler la couche de vernis. On considère que la soudure latérale du flanc du gobelet est correcte lorsque qu'il est impossible de séparer manuellement les 2 parties qui ont été assemblées sans délaminer, défibrer ou encore déchirer le carton.

La durée et la température sont déterminées par expérimentation. Les premiers essais s'effectuent à la vitesse de la machine sur une durée inférieure à la seconde à une température la plus basse d'environ 300 °C, le gobelet ainsi réalisé est contrôlé via une procédure de contrôle en production au cours de laquelle il convient d'exercer une force de chaque côté de la soudure jusqu'à ce que cette dernière cède. Si la soudure lâche sans que le carton ne se délamine, défibre ou déchire, elle est non conforme. Il convient alors d'augmenter la température pour les prochains gobelets de test. Ceci jusqu'à l'obtention d'une soudure correcte sans toutefois bruler le carton ce qui rendrait alors impossible le thermoscellage.

Le cône du gobelet étant réalisé, à l'étape 3.5, le disque du fond est posé sur le mandrin au niveau du bord circulaire du cône ayant le plus petit diamètre. Le pré-roulage du fond s'effectue alors (étape 3.6) à l'aide d'un outil spécifique. Le bord du disque formant le fond est plié pour être plaqué contre la face intérieure du cône formant le corps du gobelet.

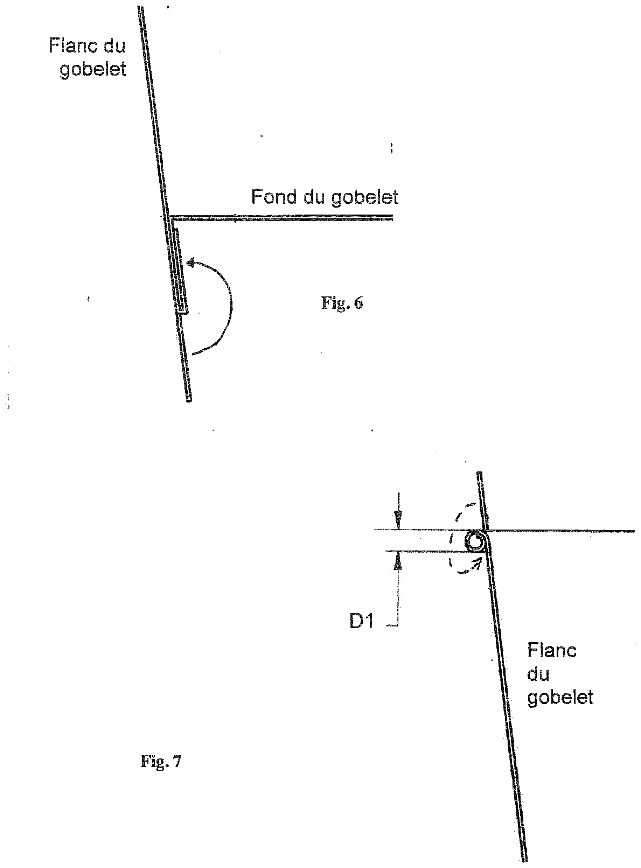

Le bord du disque est plaqué contre la surface intérieure du flanc sur une hauteur de 4 à 13 millimètres selon le format du gobelet (caractérisé notamment par le retour de fond. Puis, et comme le montre la flèche visible sur la **Fig. 6**, la partie basse du cône est pliée selon un angle de 180° vers l'intérieur pour emprisonner entre deux couches le bord du disque formant le fond du gobelet. A l'étape 3.7, une seconde soudure est alors effectuée en pressant fortement et en chauffant la partie basse du cône. Le carton est pressé au cours d'une durée inférieure à une seconde et chauffé par un souffle d'air chaud (300 à 600°C suivant les zones de soudure). La durée et la température sont déterminées de façon à ne pas faire fondre en totalité ou faire bruler la couche de vernis. La soudure du fond du gobelet est correcte lorsqu'il est impossible de séparer manuellement les 2 parties qui ont été assemblées sans délaminer, défibrer ou encore déchirer le carton.

Le roulage du bord supérieur peut maintenant être réalisé (étape 3.8). Le flanc est mis en forme en partie haute par un outil spécifique. La partie haute du flanc est pliée en arrondi par un outil de roulage afin de lui conférer une forme annulaire de section circulaire, qui sera par la suite plus confortable aux lèvres de l'utilisateur du gobelet. Ce roulage, appelé « RIM » (mot anglo-saxon signifiant « bord »), s'effectue sur au moins 360° et est illustré par la flèche en pointillé visible sur la **Fig. 7**. Le roulage annulaire du bord supérieur du gobelet permet également de former un rebord épais sur lequel vient se clipser un couvercle circulaire fabriqué en plastique ou tout autre matière alimentaire. Le diamètre noté D1 sur la **Fig. 7** du roulage circulaire du bord supérieur du flanc du gobelet est défini par l'outil de roulage, ce diamètre varie généralement de 2 à 5 millimètres. Le roulage est réalisé sous un chauffage léger (de 50°C à 150°C) de façon à se maintenir dans cette position lors du refroidissement.

A l'étape 3.9, le bord supérieur du gobelet est intégralement enroulé. Il est pris soin lors de cette étape de maintenir intacte la soudure latérale précédemment réalisée à l'étape 3.4 afin de conserver une bonne étanchéité des gobelets.

La fabrication du gobelet enduit de vernis est désormais terminée et celui-ci est maintenant éjecté (étape 3.10). L'éjection s'effectue par air comprimé, les gobelets peuvent ensuite être acheminés via une canalisation, tuyauterie au bout de laquelle ils sont empilés en rampes. Avant l'empilage, les gobelets sont suffisamment refroidis suite à l'éjection et via la canalisation pour éviter qu'ils ne se collent entre eux ou que le visuel imprimé sur le gobelet et son aspect final ne se dégradent. L'apposition du visuel s'effectue sur la bobine enduite de vernis destinée au flanc du gobelet. La face extérieure est imprimée de préférence après avoir été enduite d'une couche de 8 à 16 gr/m² d'extrait sec de vernis.

A l'étape 3.11, les gobelets réalisés en carton enduit de vernis sont empilés correctement les uns dans les autres sans se déformer ou encore détruire les soudures latérales et de fond. Le conditionnement des gobelets prend en compte le fait de pouvoir les dépiler facilement, sans phénomène d'électricité statique néfaste pour les distributeurs automatiques de type Vending ou autre. Les emballages de conditionnement des fuseaux de gobelets sont dimensionnés pour minimiser au maximum la pression s'exerçant sur les gobelets pour les faire entrer les uns dans les autres. De cette façon, les gobelets peuvent subir des manipulations nécessaires au stockage et au transport sans qu'ils ne soient détériorés et en assurant un dépilage aisé pour leur utilisation finale.

Selon une variante de réalisation, le gobelet fini est contrôlé via une seconde procédure de contrôle en production au cours de laquelle il convient de réaliser des tests fuites. Ces tests consistent à remplir un certain nombre de gobelets de différentes solutions chimiques plus ou moins agressives suivant l'utilisation finale du gobelet (soda, café, glace...) sur une durée précise et à une fréquence définie par une procédure qualité interne. Si aucune fuite n'apparait les gobelets sont conformes, sinon il convient d'affiner les réglages machine et plus particulièrement de durée et de température des soudures.

Selon une autre variante, le gobelet fini est recouvert par un couvercle doté d'une buse d'injection, et l'intérieur est mis en pression par un gaz. L'absence de fuites peut aussi être validée de cette manière.

L'invention n'est pas limitée aux modes de réalisation qui viennent d'être décrits. En particulier, les gobelets ainsi fabriqués sont utilisables avec tout type de boissons.

## Revendications

1. Procédé de fabrication d'un gobelet biodégradable et compostable à domicile destiné à contenir des boissons alimentaires chaudes et froides à partir d'au moins une feuille de carton vierge, comportant une étape de découpe (3.2) d'au moins une feuille de carton enduite pour former un flanc et un fond, et une étape d'assemblage (3.3, 3.4, 3.5, 3.6, 3.7) par thermoscellage des feuilles ainsi découpées pour former le gobelet ; **caractérisé en ce que** ladite au moins une feuille de carton vierge est enduite au moins du coté intérieur du gobelet d'une couche de vernis biodégradable et compostable en phase aqueuse selon une technique d'enduction couchage comportant une étape d'application de la feuille de carton vierge contre au moins un cylindre barboteur (3) plongeant chacun dans un bac (4) contenant ledit vernis, ledit vernis biodégradable et compostable possédant des capacités thermoscellantes pour souder entre elles les feuilles ainsi découpées, une étape de passage de la feuille de carton ainsi enduite devant un générateur de lame d'air (5) pour assurer une épaisseur uniforme de la couche de vernis sur toute la surface du carton et une étape ultérieure de séchage de la feuille ainsi imprégnée devant un poste de séchage (6), le dépôt d'extrait sec de vernis biodégradable et compostable étant de 8 à 16 grammes par m² sur la face carton destinée à l'intérieur des gobelets.

2. Procédé de fabrication selon la revendication 1, **caractérisé en ce que** l'étape d'enduction comporte également l'étape suivante :
- passage de la feuille de carton enduite sur une calandre de refroidissement (7).

3. Procédé de fabrication selon la revendication 2, **caractérisé en ce que** la feuille de carton vierge est appliquée contre une succession de plusieurs cylindres plongeant dans des bacs (4) contenant des densités différentes de vernis selon le dépôt à réaliser, les premiers bacs mis en contact avec le carton ayant une dilution plus importante que les bacs suivants pour une application en plusieurs couches sur une même face.

4. Procédé de fabrication selon l'une quelconque des revendications 1 à 3, **caractérisé en ce que** l'étape de découpe comporte deux sous-étape consistant l'une à découper le flanc à partir d'une première feuille de carton préalablement enduite, et l'autre à découper le fond à partir d'une seconde feuille de carton préalablement enduite.

5. Procédé de fabrication selon la revendication 4, **caractérisé en ce que** le carton du fond est moins épais et dispose d'un grammage plus léger que le carton utilisé pour le flanc.

6. Procédé de fabrication selon l'une quelconque des revendications 1 à 3, **caractérisé en ce que** l'étape de découpe comporte une sous-étape consistant l'une à découper le flanc et le fond à partir de la même feuille de carton préalablement enduite.

7. Procédé de fabrication selon l'une quelconque des revendications précédentes, **caractérisé en ce que** le dépôt d'extrait sec de vernis biodégradable est de 2 à 6 grammes par m² sur la face carton destinée à l'extérieur des gobelets.

8. Procédé de fabrication selon l'une quelconque des revendications précédentes, **caractérisé en ce que** l'étape d'enduction du vernis biodégradable comporte une étape de régulation de la densité de vernis en utilisant l'un au moins des moyens pris dans la liste suivante : « une racle passant sur la feuille de carton, une lame d'air, une barre de Meyer ».

9. Procédé de fabrication selon l'une quelconque des revendications précédentes, **caractérisé en ce qu'**il comporte une étape de test consistant à d'exercer une force de chaque côté de la soudure liant les cotés latéraux thermoscellés du flanc ou de la soudure liant le flanc au fond, jusqu'à ce que cette dernière cède, la température pour les prochains essais étant augmentée si la soudure lâche sans que le carton ne se délamine, défibre ou déchire.

10. Procédé de fabrication selon l'une quelconque des revendications précédentes, **caractérisé en ce qu'**il comporte une étape d'impression d'un élément graphique sur la face extérieure du flanc du gobelet ainsi formé, ladite étape intervenant après une étape d'enduction de ladite face avec une couche de 2 à 6 grammes/m² d'extrait sec de vernis.

## Patentansprüche

1. Verfahren zur Herstellung eines biologisch abbaubaren und heimkompostierbaren Bechers, der dazu bestimmt ist, warme und kalte Nahrungsgetränke zu enthalten, ausgehend von wenigstens einem Blatt Frischkarton, umfassend einen Schritt (3.2) des Schneidens mindestens eines beschichteten Kartonblatts zur Ausbildung einer Seitenwand und eines Bodens, und einen Schritt (3.3, 3.4, 3.5, 3.6, 3.7) des Zusammenfügens durch Heißsiegeln der so geschnittenen Blätter zur Ausbildung des Bechers; **dadurch gekennzeichnet, dass** das genannte mindestens eine Frischkartonblatt mindestens auf der Innenseite des Bechers mit einer Schicht eines biologisch abbaubaren und kompostierbaren Lacks auf Wasserbasis gemäß einer Streichbeschichtungstechnik beschichtet wird, umfassend einen Schritt des Aufbringens des Frischkartonblatts auf mindestens einen Tauchzylinder (3), welcher jeweils in einen Behälter (4) eintaucht, der den genannten Lack enthält, wobei der genannte biologisch abbaubare und kompostierbare Lack heißsiegelnde Eigenschaften aufweist, um die so geschnittenen Blätter miteinander zu verschweißen, einen Schritt des Entlangführens des so beschichteten Kartonblatts vor einem Luftstoßgenerator (5) zum Sicherstellen einer gleichmäßigen Dicke der Lackschicht über die gesamte Fläche des Kartons und einen letzten Schritt des Trocknens des so imprägnierten Blatts vor einer Trocknungsstation (6), wobei die Abscheidung des Trockenextrakts des biologisch abbaubaren und kompostierbaren Lacks von 8 bis 16 Gramm pro m² auf der Kartonfläche beträgt, die für die Innenseite der Becher bestimmt ist.

2. Herstellungsverfahren nach Anspruch 1, **dadurch gekennzeichnet, dass** der Schritt des Beschichtens auch den folgenden Schritt umfasst:
- Führen des beschichteten Kartonblatts auf einen Kühlkalander (7).

3. Herstellungsverfahren nach Anspruch 2, **dadurch gekennzeichnet, dass** das Frischkartonblatt auf eine Abfolge mehrerer Zylinder aufgebracht wird, welche in Behälter (4) eintauchen, die unterschiedliche Lackdichten gemäß der zu erreichenden Abscheidung enthalten, wobei die ersten Behälter, die mit dem Karton in Kontakt gebracht werden, eine stärkere Verdünnung aufweisen als die folgenden Behälter für ein Aufbringen in mehreren Schichten auf derselben Fläche.

4. Herstellungsverfahren nach einem der Ansprüche 1 bis 3, **dadurch gekennzeichnet, dass** der Schritt des Schneidens zwei Teilschritte umfasst, die einerseits aus einem Schneiden der Seitenwand aus einem zuvor beschichteten ersten Kartonblatt und andererseits aus einem Schneiden des Bodens aus einem zuvor beschichteten zweiten Kartonblatt bestehen.

5. Herstellungsverfahren nach Anspruch 4, **dadurch gekennzeichnet, dass** der Karton des Bodens weniger dick ist und über eine leichtere Grammatur verfügt als der für die Seitenwand verwendete Karton.

6. Herstellungsverfahren nach einem der Ansprüche 1 bis 3, **dadurch gekennzeichnet, dass** der Schritt des Schneidens einen Teilschritt umfasst, der seinerseits aus einem Schneiden der Seitenwand und des Bodens aus demselben zuvor beschichteten Kartonblatt besteht.

7. Herstellungsverfahren nach einem der vorhergehenden Ansprüche, **dadurch gekennzeichnet, dass** die Abscheidung des Trockenextrakts des biologisch abbaubaren Lacks von 2 bis 6 Gramm pro m² auf der Kartonfläche beträgt, die für die Außenseite der Becher bestimmt ist.

8. Herstellungsverfahren nach einem der vorhergehenden Ansprüche, **dadurch gekennzeichnet, dass** der Schritt des Beschichtens mit dem biologisch abbaubaren Lack einen Schritt des Regulierens der Lackdichte unter Verwendung von mindestens einem der in der folgenden Liste angeführten Mittel umfasst: "einem Rakel, das über das Kartonblatt geführt wird, einem Luftstoß, einem Meyer Bar".

9. Herstellungsverfahren nach einem der vorhergehenden Ansprüche, **dadurch gekennzeichnet, dass** es einen Testschritt umfasst, der aus dem Ausüben einer Kraft von jeder Seite der Schweißung, welche die heißgesiegelten lateralen Seiten der Seitenwand verbindet, oder der Schweißung, welche die Seitenwand mit dem Boden verbindet, besteht, bis diese Letztere nachgibt, wobei die Temperatur für die nächsten Versuche erhöht wird, wenn die Schweißung aufgeht, ohne dass der Karton delaminiert, zerfasert oder zerreißt.

10. Herstellungsverfahren nach einem der vorhergehenden Ansprüche, **dadurch gekennzeichnet, dass** es einen Schritt des Druckens eines grafischen Elements auf die Außenfläche der Seitenwand des so gebildeten Bechers umfasst, wobei der genannte Schritt nach einem Schritt des Beschichtens der genannten Fläche mit einer Schicht von 2 bis 6 Gramm/m² des Trockenextrakts des Lacks erfolgt.

## Claims

1. Method for manufacturing a biodegradable and home compostable cup intended for containing hot and cold food beverages from at least one sheet of virgin paperboard, comprising a step (3.2) for cutting out at least one sheet of coated paperboard to form a side wall and a bottom, and a step for joining (3.3, 3.4, 3.5, 3.6, 3.7) the sheets thus cut out by heat-sealing to form the cup, **characterized in that** said at least one virgin paperboard sheet is coated on at least the interior side of the cup with a biodegradable and compostable aqueous phase varnish according to a coating/spreading technique, comprising a step of application of the virgin paperboard sheet against at least one bubbling cylinder (3) each plunging into a tub (4) containing said varnish, said biodegradable and compostable varnish having heat-sealing capacities to weld together the sheets thus cut, a step for the passage of the thus coated paperboard sheet before an air knife generator (5) to ensure a uniform thickness of the varnish layer throughout the surface of the paperboard and a subsequent step for drying the thus impregnated sheet before a drying station (6). the deposit of dry extract of biodegradable and compostable varnish being 8 to 16 grams per m² on the paperboard face intended to be on the interior of the cups

2. Method for manufacturing according to claim 1, **characterized in that** the coating step also comprises the following step:
- passage of the coated paperboard sheet to a cooling calender (7).

3. Method for manufacturing according to claim 2, **characterized in that** the paperboard sheet is applied against a succession of several cylinders plunging into tubs (4) containing different densities of varnish depending on the deposit to be made, the first tubs placed in contact with the paperboard having greater dilution than the following tubs for an application in several layers on a same face.

4. Method for manufacturing according to any one of the claims 1 to 3, **characterized in that** the cutting-out step comprises two sub-steps, one step for cutting out the side wall from a first pre-coated sheet of paperboard and the other step for cutting out the bottom from a second pre-coated sheet of paperboard.

5. Method for manufacturing according to claim 4, **characterized in that** the paperboard used for the bottom is less thick and has a lighter grammage than the paperboard used for the side wall.

6. Method for manufacturing according to any one of the claims 1 à 3, **characterized in that** the cutting-out step comprises a sub-step in which the side wall and the bottom are cut out of the same sheet of pre-coated paperboard.

7. Method for manufacturing according to any one of the preceding claims, **characterized in that** the deposit of dry extract of biodegradable varnish is 2 to 6 grams per m² for the paperboard face intended to be on the exterior of the cups.

8. Method for manufacturing according to any one of the preceding claims, **characterized in that** the step for coating with biodegradable varnish comprises a step for regulating the density of varnish by using at least one of the means taken from the following list: "a doctor blade passing over the paperboard sheet, an air knife, a Meyer rod".

9. Method for manufacturing according to any one of the preceding claims, **characterized in that** it comprises a test step consisting of the exertion of a force on each side of the sealed joint binding the heat-sealed lateral sides of the side wall or the seal joint binding the side wall to the bottom until the sealed joint yields, the temperature for the following trials being increased if the sealed joint yields without the paperboard getting delaminated, de-fibered or torn.

10. Method for manufacturing according to any one of the preceding claims **characterized in that** it comprises a step for printing a graphic element on the external face of the side wall of the cup thus formed, said step taking place after a step of coating said face with a layer of 2 to 6 grams/m² of dry varnish extract
